# EUROPÄISCHE PATENTANMELDUNG

(11) **EP 3 085 446 A1**
(43) Veröffentlichungstag der Anmeldung: **26.10.2016**
(21) Anmeldenummer: 15003625.9
(22) Anmeldetag: 21.12.2015
(51) Int. Cl.: B01L 9/00, B01L 3/00

(54) **INKUBATIONSRINNE**

(30) Priorität: 24.04.2015 EP 15001230
(71) Anmelder: Euroimmun Medizinische Labordiagnostika AG, 23560 Lübeck (DE)
(72) Erfinder: Kaffka, Christian, 23942 Dassow (DE)
(74) Vertreter: Richter, Carsten

(57) **Zusammenfassung**

Die vorliegende Erfindung betrifft eine Inkubationsrinne mit einer von den Wänden der Inkubationsrinne gebildeten Vertiefung und einem Boden,
wobei die Inkubationsrinne ein Mittel zum Absaugen von Flüssigkeit an wenigstens einem Längsende der Vertiefung aufweist,
bevorzugt eine in einen Auslasskanal mündende Öffnung an dem Längsende der Vertiefung, besonders bevorzugt in einer Wand der Inkubationsrinne, wobei Öffnung und Auslasskanal so ausgeführt sind, dass Unterdruck angelegt werden kann,
wobei die Inkubationsrinne über ihre Querachse schwenkbar ist
und wobei die Inkubationsrinne mit einem Träger bestückt werden kann.

## Beschreibung

Die vorliegende Erfindung betrifft eine Inkubationsrinne mit einer von den Wänden der Inkubationsrinne gebildeten Vertiefung und einem Boden,
wobei die Inkubationsrinne ein Mittel zum Absaugen von Flüssigkeit an wenigstens einem Längsende der Vertiefung aufweist,
bevorzugt eine in einen Auslasskanal mündende Öffnung an dem Längsende der Vertiefung, besonders bevorzugt in einer Wand der Inkubationsrinne, wobei Öffnung und Auslasskanal so ausgeführt sind, dass Unterdruck angelegt werden kann,
wobei die Inkubationsrinne über ihre Querachse schwenkbar ist
und wobei die Inkubationsrinne mit einem Träger bestückt werden kann.

Pathologische und labordiagnostische Untersuchungen stellen eine unverzichtbare Grundlage für die moderne Medizin dar. Mittlerweile steht eine Vielzahl von routinemäßig durchführbaren Tests zur Verfügung, mit Hilfe derer in Abwesenheit des Patienten aus Probenmaterial entscheidende Informationen zum vorliegenden Krankheitsbild, zur Prognose oder zum Erfolg einer Behandlung erhalten werden können.

Dabei können Patientenproben in Form von Gewebeschnitten oder Zellen zunächst angefärbt und die angefärbten Strukturen im Rahmen einer Befunderstellung dann untersucht werden. Insbesondere im Bereich der Histologie bzw. Histopathologie werden mikrometerdünne, gefärbte Gewebsschnitte hergestellt und am Mikroskop beurteilt.

Zum Probengut beim histologischen Arbeiten gehören vor allem Operationspräparate, Probeexzisionen sowie mittels Biopsien entnommenes Gewebe, wobei das vorrangige Ziel bei der Untersuchung derart angefärbter Gewebeschnitte in der sicheren Erkennung und Typisierung von Tumoren liegt. Mit Hilfe derartiger Verfahren können Gewebe histologisch charakterisiert und über die Untersuchungen von Wucherungen und Tumoren Krebs diagnostiziert werden.

Alternativ können Patientenproben auf das Vorhandensein oder die Konzentration bestimmter Moleküle untersucht werden, wenn die erhaltenen Werte anhand von Referenzdaten für die Diagnose nützliche Information darstellen. So kann der Nachweis von spezifischen Autoantikörpern anzeigen, dass der Patient unter einer Autoimmunkrankheit leidet. Beispielhafte Autoimmunkrankheiten umfassen Infektionen, entzündliche Krankheiten wie rheumatoide Krankheiten, Stoffwechselkrankheiten wie Diabetes und neurologische Erkrankungen.

Ein ungelöstes Problem ist die Knappheit und Hochpreisigkeit von Reagenzien und Probenmaterial. Wirtschaftlichkeitserwägungen führen dazu, dass Arbeitsabläufe und Materialverbrauch optimiert werden. Insbesondere geht der Trend in Richtung Miniaturisierung: diagnostische, pathohistologische und analytische Reaktionen werden nicht mehr im Maßstab von Millilitern, sondern von Mikro- oder gar Nanolitern ausgeführt. Das spart Reagenzien, Platz und gestattet, dass eine einmal gewonnene Probe genug Ausgangsmaterial für eine große Anzahl von diagnostischen Untersuchungen liefert. Nicht zuletzt bleibt dem Patienten auch für den Fall, dass ein einzelner diagnostischer Test misslingt, die erneute Entnahme einer Probe erspart.

Ein besonderes Problem bei der Miniaturisierung besteht darin, dass das Verhältnis des durch Kapillarkräfte und Adhäsion an Oberflächen zurückgehaltenen Flüssigkeitsvolumens einerseits und des Gesamtvolumens der für einen Verfahrensschritt eingesetzten Flüssigkeit andererseits besonders hoch ist. In anderen Worten haftet dermaßen viel Flüssigkeit an den Oberflächen, dass diese nach einem Verfahrensschritt durch Abgießen oder -pipettieren nicht effizient entfernt werden kann.

Es verbleibt ein relativ großes Volumen der Flüssigkeit, das nachfolgende Verfahrensschritte stört. Beispielsweise verdünnt eine verbliebene Waschlösung ein für eine nachfolgende Reaktion eingebrachtes Reagenz und verringert dadurch die Ausbeute bzw. Empfindlichkeit der nachfolgenden Reaktion.

Die US 2014/248618 beschreibt eine Anordnung für eine mikrofluidische Fließzelle, die jedoch nicht schwenkbar ist und auch keine Inkubationsrinne, sondern ein geschlossenes System darstellt. Gleiches gilt für die Mikroskopiervorrichtung, die in der US 6 673 620 beschrieben ist.

Eine der vorliegenden Erfindung zu Grunde liegende Aufgabe besteht daher darin, ein Verfahren bereitzustellen, mit dem pathologisch oder labordiagnostisch zu untersuchenden Proben mit möglichst geringem Einsatz von Reagenzien und Probe untersucht werden können. Insbesondere besteht die Aufgabe darin, die Konzentration der Reagenzien unter Einsatz einer gegebenen absoluten Menge zu erhöhen.

Ebenso sollen kurze Reaktionszeiten und eine hohe Qualität der Färbungen, insbesondere durch eine kontinuierliche Konvektion der flüssigen Phase, gewährleistet werden. Zeitintensive und fehlerträchtige manuelle Schritte während der Färbung sollen weitgehend vermieden werden.

Eine weitere, der vorliegenden Erfindung zu Grunde liegende Aufgabe besteht darin, den Platzbedarf, Verlust an Flüssigkeit und/oder die Dauer der Überführung oder des gesamten Nachweisverfahrens gegenüber den im Stand der Technik beschriebenen Verfahren zu verringern. Gleichzeitig soll die Reproduzierbarkeit erhalten oder erhöht werden.

Eine weitere Aufgabe besteht darin, ein Verfahren bereitzustellen, das die Gefahr von Fehlgriffen und damit verbundener Verschwendung von Reagenzien und Beschädigungen an der Probe minimiert.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Die der Erfindung zu Grunde liegende Aufgabe wird in einem ersten Aspekt gelöst durch eine Inkubationsrinne mit einer von den Wänden der Inkubationsrinne gebildeten Vertiefung und einem Boden, wobei die Inkubationsrinne ein Mittel zum Absaugen von Flüssigkeit an wenigstens einem Längsende der Vertiefung aufweist, bevorzugt eine in einen Auslasskanal mündende Öffnung an dem Längsende der Vertiefung, besonders bevorzugt in einer Wand der Inkubationsrinne, wobei Öffnung und Auslasskanal so ausgeführt sind, bevorzugt druckabschließend, dass Unterdruck angelegt werden kann, wobei die Inkubationsrinne über ihre Querachse schwenkbar ist und wobei die Inkubationsrinne mit einem Träger bestückt werden kann.

In einer bevorzugten Ausführungsform des ersten Aspekts ist über den Auslasskanal Unterdruck angelegt.

In einer weiteren bevorzugten Ausführungsform gestattet das Mittel zum Absaugen das Absaugen der Flüssigkeit *am Boden* und ist bevorzugt eine in einen Auslasskanal mündende Öffnung, die sich am Boden der Inkubationsrinne befindet.

In einer weiteren bevorzugten Ausführungsform weist die Inkubationsrinne eine in einen Auslasskanal mündende Öffnung auf, die in einen auf der Ebene des Bodens oder darunter verlaufenden Auslasskanal mündet, der an ein von der Vertiefung getrenntes Auslasskompartiment anschließt, welches eine Auslasskompartimentöffnung aufweist.

In einer weiteren bevorzugten Ausführungsform enthält die Inkubationsrinne einen Träger mit einer biologischen Probe, die bevorzugt auf der Seite des Trägers angeordnet ist, die dem Boden der Inkubationsrinne zugewandt ist, wobei der Träger bevorzugt auf dem Boden aufliegt.

In einer weiteren bevorzugten Ausführungsform enthält die Inkubationsrinne eine Flüssigkeit, wobei die Inkubationswanne bevorzugt eine in einen Auslasskanal mündende Öffnung aufweist und die Oberfläche der Flüssigkeit bevorzugt über der Öffnung liegt.

In einer weiteren bevorzugten Ausführungsform sind der Träger und die Inkubationsrinne derart aneinander angepasst, dass der Träger in der Vertiefung entlang der Längsachse der Inkubationsrinne hin- und her bewegt werden kann, wenn die Inkubationsrinne mit dem Träger bestückt ist.

In einer weiteren bevorzugten Ausführungsform umfasst die Inkubationsrinne weiter eine in einen Einlasskanal mündende Öffnung, bevorzugt in einer Wand der Inkubationsrinne, die an ein von der Vertiefung getrenntes Einlasskompartiment anschließt, das eine Einlasskompartimentöffnung aufweist, wobei der Einlasskanal bevorzugt auf der Ebene des Bodens oder darunter entlang der Längsachse der Inkubationsrinne verläuft.

In einer weiteren bevorzugten Ausführungsform weist die Inkubationsrnne eine in einen Auslasskanal mündende Öffnung entlang der Längsachse der Inkubationsrinne am einen Längsende und eine in einen Einlasskanal mündende Öffnung am anderen Längsende der Vertiefung auf.

In der neunten bevorzugten Ausführungsform, bei der es sich auch um eine Ausführungsform der dritten bis achten Ausführungsform handelt, umfasst die Inkubationsrinne weiter eine auf der Auslasskompartimentöffnung lösbar aufsitzende Absaughaube mit einer Ableitung, über die Unterdruck angelegt werden kann.

In der zehnten bevorzugten Ausführungsform, bei der es sich auch um eine bevorzugte Ausführungsform der ersten bis neunten Ausführungsform handelt, kann der Träger beim Bewegen bis an ein Längsende der Vertiefung bewegt werden und schließt dabei lückenlos an das Längsende der Vertiefung an.

Die der Erfindung zu Grunde liegende Aufgabe wird in einem zweiten Aspekt gelöst durch eine Vorrichtung umfassend ein Unterteil aufweisend erfindungsgemäße Inkubationsrinnen mit jeweils wenigstens einer Auslasskompartimentöffnung sowie ein rahmenförmiges Oberteil umfassend Absaughauben,
wobei Unterteil und Oberteil derart aneinander angepasst sind, dass das Oberteil derart auf das Unterteil aufgesetzt werden kann, dass auf jeder Auslasskompartimentöffnung eine Absaughaube aufsitzt.

Die der Erfindung zu Grunde liegende Aufgabe wird in einem dritten Aspekt gelöst durch ein Verfahren zum Inkubieren eines Trägers, umfassend die Schritte:
a) Inkubation eines Trägers in der Vertiefung einer Inkubationsrinne mit einer von den Wänden der Inkubationsrinne gebildeten Vertiefung und einem Boden in Gegenwart einer Flüssigkeit, und
b) Absaugen der Flüssigkeit an einem Längsende der Vertiefung, bevorzugt über eine Öffnung, die in einen unter Unterdruck stehenden Auslasskanal mündet,
wobei sich die Öffnung am Längsende der Vertiefung befindet, bevorzugt am Boden der Inkubationsrinne,
und wobei es sich bei der Inkubationsrinne um eine erfindungsgemäße Inkubationsrinne gemäß dem ersten Aspekt oder eine Inkubationsrinne in der Vorrichtung gemäß dem zweiten Aspekt handelt.

In einer ersten bevorzugten Ausführungsform des dritten Aspekts ist die Inkubationsrinne über ihre Querachse schwenkbar und wenigstens einer der Schritte a) und b), bevorzugt Schritt b) wird unter Schwenken durchgeführt.

In einer zweiten bevorzugten Ausführungsform des dritten Aspekts wird Schritt b) in dem Moment ausgeführt, in dem eine Inkubationsrinne derart geschwenkt ist, dass eine darin befindliche Flüssigkeit sich an dem Längsende der Inkubationsrinne ansammelt, bevorzugt im größtmöglichen Maß, an dem die Flüssigkeit abgesaugt wird,
und in dem bevorzugt der Träger sich bis an dieses Längsende der Vertiefung bewegt hat und besonders bevorzugt dabei lückenlos an das Längsende der Vertiefung anschließt.

Die vorliegende Erfindung betrifft eine Inkubationsrinne, an die erfindungsgemäß zur Entfernung von Flüssigkeit Unterdruck angelegt wird. Die Inkubationsrinne ist so ausgestaltet, dass auf diese Weise auch Flüssigkeitsreste entfernt werden können, die durch ein ausschließlich schwerkraftgetriebenes Abgießen nicht entfernt würden. Die Flüssigkeit wird daher effizienter entfernt als mit herkömmlichen Inkubationsrinnen und Verfahren.

In einer bevorzugten Ausführungsform handelt es sich um eine längliche Inkubationsrinne, d.h. das Verhältnis der kürzeren Seite zur längeren Seite, welche die Längsachse definiert, beträgt 1 : wenigstens 1, beispielsweise 1:1,25, 1:1,5, 1:1,61, 1:1,75, 1:1,86, 1:2, 1:2,5, 1:2,923, 1:3, 1:4, 1:5, 1:5,2, 1:7,5 oder 1:10. Die Inkubationsrinne ist flüssigkeitsdicht. Sie kann mit einem Deckel, einer Folie oder einer ähnlichen Abdeckung versehen sein. Die Inkubationsrinne kann in Form eines ei nlegbaren Einsatzes in ein daran angepasstes Tablett einsetzbar sein, das eine Vielzahl von Inkubationsrinnen, z.B. wenigstens 2, 3, 4, 5, 6, 10, 12, 15, 20 oder 30 Inkubationsrinnen, enthalten kann. In einer bevorzugten Ausführungsform kann das Tablett mehrere Inkubationsrinnen unterschiedlicher Größe aufnehmen.

Der Boden der Inkubationsrinne ist flach und bildet eine Ebene. Nichtsdestotrotz muss es sich keinesfalls um eine Ebene ohne jegliche Unregelmäßigkeiten handeln, vielmehr kann der Boden mit Rillen oder Aufrauhungen versehen sein. Sofern ein strukturelles Merkmal als "unter" oder "über" dem Boden, seiner Ebene oder einer zu dieser Ebene parallelen Ebene lokalisiert angegeben ist, ist damit die Lage relativ zu dieser Ebene vertikal gemeint.

Die Inkubationsrinne kann mit einem Träger bestückt sein. Dabei handelt es sich bevorzugt um einen flachen, an die Breite der Inkubationsrinne angepassten Träger, bevorzugt einen Glasträger, noch bevorzugter einen Biochip, wie er beispielsweise in der DE 20 2011 005 278 beschrieben ist. Der Träger kann transparent sein. Er kann direkt mit einer Probe beschichtet sein, es ist jedoch auch möglich, die Probe ihrerseits auf einen weiteren Objektträger, beispielsweise eine Folie oder eine dünne Glas- oder Kunststoffscheibe aufzutragen, die auf den transparenten Objektträger geklebt oder auf andere Weise darauf befestigt wird. Der Träger kann Eigenschaften und Kennzeichnungen aufweisen, wie sie in der EP14152113.8 beschrieben sind. Bevorzugt ist die Probe an der Unterseite des Trägers angeordnet, d. h. der Seite, die dem Boden der Inkubationsrinne zugewandt ist.

Inkubationsrinne und Träger sind derart aneinander angepasst, dass die Inkubationsträger mit dem Träger bestückt werden kann. Bevorzugt sind Inkubationsrinne und Träger länglich, wobei die Länge des Trägers die Länge der Vertiefung unterschreitet, so dass der in die Vertiefung eingelegte Träger nicht beide Längsenden der Vertiefung berührt. Bevorzugt beträgt die Länge des Trägers 50 bis 99, bevorzugter 50 bis 95, noch bevorzugter 60 bis 90 Prozent der Länge der Vertiefung. Die Breite des Trägers ist bevorzugt so gewählt, dass sich der in die Vertiefung eingebrachte Träger nicht auf dem Boden der Inkubationsrinne drehen kann.

Der in die Vertiefung eingebrachte Träger ist bevorzugt unbefestigt und kann sich beim Schwenken der Inkubationsrinne mit Träger und Flüssigkeit darin im Rahmen der geometrischen Begrenzungen durch die Wände der Vertiefung bewegen, bevorzugt entlang der Längsachse. Bevorzugt sind die Form von Inkubationsrinne und Träger derart aneinander angepasst, dass ein Ende des Trägers lückenlos an das Längsende der Vertiefung anschließt, wenn die Inkubationsrinne derart geschwenkt wird, dass sich der Träger bis zum Ende der Vertiefung bewegt und auf dem Längsende der Vertiefung aufsetzt. Die lückenlose Abschließung muss sich nicht über die gesamte Breite des Trägers erstrecken, reicht aber aus, um unter dem Träger befindliche bzw. darunter strömende Flüssigkeit wenigstens teilweise in Richtung der Auslasskompartimentöffnung zu kanalisieren.

Alternativ kann es sich bei dem Träger um einen Teststreifen und/oder eine geeignete Membran handeln, beispielsweise eine Nitrozellulosemembran, beschichtet mit Proben oder diagnostischen Reagenzien.

In einer besonders bevorzugten Ausführungsform liegt der Träger auf dem Boden der Vertiefung derart auf, dass er nach Einfüllen einer Flüssigkeit mit derselben wenigstens teilweise unterschichtet ist, so dass eine Probe auf dem Träger mit der Flüssigkeit in Kontakt steht. Der Träger kann direkt auf dem Boden aufliegen, oder die Inkubationsrinne und/oder der Träger weist ein Mittel zum Fixieren eines Abstandes, bevorzugt des Mindestabstandes, zwischen Unterseite des Trägers und Boden der Vertiefung auf. Beispielsweise kann auf der Unterseite des Trägers ein oder mehr als ein Fuß angebracht sein, beispielsweise ein Sockel oder eine oder mehr als eine Schiene, optional in Form eines parallel angeordneten Paares, beispielsweise parallel zur Längsrichtung des Trägers an dessen dem Boden zugewandten Seite angebracht, aus dem gleichen Material wie der Träger. Alternativ kann auf dem Boden der Inkubationsrinne oder an den Wänden ein Rahmen aufliegen oder angebracht sein, auf dem der Träger in einem zum Boden der Vertiefung fixierten Abstand ruht. Auch auf andere Weise kann der notwendige lokale Flüssigkeitsaustausch gewährleistet werden, z.B. dadurch, dass die Inkubationsrinne regemäßig bewegt wird und der Träger wenigstens kurzzeitig verrückt wird oder ohne Umdrehung aufschwimmt.

Das Mittel zum Fixieren des Abstandes bewirkt, besonders wenn die Probe auf der Unterseite des Trägers angeordnet ist, dass die Probe selbst dann mit Flüssigkeit in Kontakt steht, wenn der Träger nicht vollständig bedeckt ist. Weiterhin bewirkt diese Anordnung die Ausbildung eines eigenen Kompartimentes, abgeschlossen durch Boden unten, Unterseite des Trägers oben und die Wände an der Seite, dessen Inhalt über eine Öffnung am Boden der Inkubationsrinne besonders effektiv abgesaugt werden kann. Dabei wird auch Flüssigkeit entfernt, die auf Grund von Wechselwirkung mit Oberflächen an dem Träger oder der Inkubationsrinne haftet und sich durch Abgießen nicht entfernen lassen würde. Weiterhin wird durch das Kompartiment die Verdunstung der Flüssigkeit und damit der Verbrauch an Reagenzien verringert.

In einer besonders bevorzugten Ausführungsform ist oder wird die Probe diagnostisch oder analytisch prozessiert. Das bedeutet bevorzugt, dass die Probe derart mit diagnostischen Verfahren und/oder Agenzien behandelt wurde, dass ihr Zustand, optional nach weiteren Prozessierungsschritten, eine Analyse und einen Beitrag zu einer Diagnose gestattet. Es kommen beispielsweise labormedizinische, zytologische, morphologisch-mikroskopische, biochemische, (immun)chemische, besonders immunthistochemische oder enzymhistochemische, molekularbiologische, histologische, serologische, pathologische, chemische oder physikalische Analyseverfahren in Frage. In einer besonders bevorzugten Ausführungsform ist die Probe eine biologische Probe, die paraffiniert und/oder in Formalinlösung fixiert ist. In einer besonders bevorzugten Ausführungsform wird ein Gewebeschnitt mit Farbstoffen oder markierten Antikörpern, bevorzugt fluoreszenzmarkierten Antikörpern, angefärbt und mit Hinblick auf die Morphologie der darin enthaltenen Zellen lichtmikroskopisch untersucht. Beispielhafte molekularbiologische Verfahren umfassen *in situ*-Hybridisierungen wie die Fluoreszenz*in situ*-Hybridisierung. Beispielhafte pathologische Verfahren umfassen Färbungen wie die ATPase-, NADH-, Hämatoxylin-/Eosin-, Gomori-Trichrom-, PAS-, und Ölrot-Färbung an Muskelbiopsien. Geeignete Reagenzien, Software und Geräte zum Prozessieren von Proben sind im Handel erhältlich, beispielsweise von der Firma EUROIMMUN AG Medizinische Labordiagnostika, Lübeck.

Die biologische Probe kann beispielsweise aus der Gruppe umfassend Gewebe, bevorzugt Gewebeschnitte oder Gewebebiopsien, z. B. Schnellschnitte, biologische Zellen wie eukaryontische oder prokaryontische Zellen oder Produkte daraus, Viren, aufgereinigte, isolierte oder künstlich hergestellte Moleküle wie Nukleinsäuren, Polypeptide, Lipide oder Kohlenhydrate ausgewählt sein. Bevorzugt ist eine biologische Probe menschlichen oder tierischen Ursprungs.

Die Inkubationsrinne weist einen Auslasskanal mit einer Auslasskanalöffnung zur Entfernung von Flüssigkeit aus der Inkubationsrinne über Absaugen auf, der so ausgestaltet ist, dass der Träger beim Absaugen nicht entfernt oder beschädigt wird. In einer bevorzugten Ausführungsform handelt es sich um einen Schlauch, dessen Ende in die Flüssigkeit eingeführt wird. Bevorzugt handelt es sich um einen in die Inkubationsrinne integrierten Kanal. An den Auslasskanal kann zum Absaugen Druck angelegt werden.

Die Breite des Auslasskanals beträgt bevorzugt 50 bis 100 %, bevorzugter 60 bis 95 %, noch bevorzugter 75 bis 95 % der Breite der Vertiefung der Inkubationswanne oder des Trägers, bevorzugt des Trägers.

Bevorzugt mündet der Auslasskanal in ein Auslasskompartiment mit einer Auslasskompartimentöffnung. Dabei handelt es sich um einen Raum, bevorzugt entlang der Längsachse der Inkubationsrinne an einem Ende derselben, der abgesehen von der Mündung des Kanals und der Öffnung gegen Druck- und Flüssigkeitsverlust abgeschlossen ist und in dem sich bei entsprechender Neigung der Inkubationsrinne darin enthaltene Flüssigkeit sammeln kann, ohne mit dem Träger in Kontakt zu stehen. Die Auslasskompartimentöffnung ist so ausgestaltet, dass eine Absaugvorrichtung, bevorzugt eine Absaughaube lösbar oder fest angebracht werden kann. Der Boden des Auslasskompartimentes kann wenigstens teilweise unterhalb der Ebene des Bodens der Vertiefung liegen, um den Flüssigkeitsfluss in das Kompartiment zu unterstützen. Unter dem Begriff "Absaughaube" wird, wie hierin verwendet, bevorzugt ein rundes Unterteil, bevorzugt, wenigstens am Boden, aus einem flexiblen Material, beispielsweise ein Gummi- oder Kunststoff-Saugnapf, verstanden, das unter Druck abschließend auf der Öffnung aufsitzt und in das eine Ableitung eingearbeitet ist, über die Druck angelegt wird.

Die Öffnung des Auslasskanals ist ausgehend von der Ebene des Bodens vertikal so angeordnet, dass wenigstens ein Teil von ihr, bevorzugt die gesamte Öffnung unterhalb der Oberfläche einer Flüssigkeit liegt, mit der die Inkubationsrinne gefüllt ist, noch bevorzugter soweit gefüllt ist, dass der Träger gerade vollständig mit Flüssigkeit bedeckt ist. Bevorzugt ist die Öffnung am Boden angeordnet. Das ist der Fall, wenn in der Inkubationsrinne befindliche Flüssigkeit, von an Oberflächen anhaftenden Resten abgesehen, vollständig ablaufen kann, wenn die Rinne derart geneigt ist, dass die Flüssigkeit in Richtung der Öffnung läuft.

In einer bevorzugten Ausführungsform steht der Auslasskanal unter Unterdruck, der bevorzugt wenigstens derart bemessen ist, dass Flüssigkeit in der Vertiefung abgesaugt wird. Die Förderleistung, mit der die Flüssigkeit abgesaugt wird, kann 0,1 bis 10, bevorzugt 0,2 bis 5, noch bevorzugter 0,3 bis 3 l/min betragen. Es können übliche Vorrichtungen zum Absaugen verwendet werden, beispielsweise Membran-, Zahnrad-, Kolben- oder Peristaltikpumpen. Das Absaugen der Flüssigkeit kann kontinuierlich oder diskontinuierlich erfolgen. In einer bevorzugten Ausführungsform erfolgt das Absaugen kontinuierlich, d. h. es wird nicht der überwiegende Teil der Flüssigkeit in einem Zug, beispielsweise am Ende des Inkubationsvorganges, abgesaugt, sondern in mehreren Schritten. Besonders bevorzugt wird bei einem Verfahrensschritt, der das Inkubieren des Trägers in einer Flüssigkeit umfasst, zu wenigstens einem Zeitpunkt, bevorzugt wenigstens 10, 20, 30, 60, 120, 300, 600 Sekunden, 10, 15, 20 oder 30 Minuten lang gleichzeitig Flüssigkeit an einem Ende der Inkubationsrinne eingelassen und am anderen Ende der Inkubationsrinne abgesaugt. Auf diese Weise kommt der Träger stets nur mit unverbrauchter, frischer Flüssigkeit in Kontakt. Dies beschleunigt die Prozessierung des Trägers bzw. der biologischen Probe. In einer weiteren bevorzugten Ausführungsform wird der Träger nach dem Einlassen der Flüssigkeit zunächst darin inkubiert, bevorzugt wenigstens 10, 20, 30, 60, 120, 300 Sekunden, 10, 15 oder 30 Minuten lang, bevor die Flüssigkeit abgesaugt wird.

Die Inkubationsrinne kann mit einer Flüssigkeit gefüllt sein, bevorzugt einer wässrigen Flüssigkeit, noch bevorzugter einem Waschpuffer oder Reagenz zum Prozessieren einer Probe auf dem Träger. Das Volumen der Flüssigkeit wird so bemessen, dass die biologische Probe damit in ausreichendem Kontakt steht. In einer bevorzugten Ausführungsform ist das Volumen der Flüssigkeit in der Inkubationsrinne so bemessen, dass sie Träger und Probe darauf in horizontaler Lage vollständig bedeckt. In einer weiteren bevorzugten Ausführungsform ist es so bemessen, dass die Flüssigkeit eine Probe vollständig bedeckt, die an der Seite des Trägers angeordnet ist, welche dem Boden zugewandt ist. In einer weiteren bevorzugten Ausführungsform ist es so bemessen, dass es die Probe nicht andauernd, aber regelmäßig vollständig benetzt, wenn die Inkubationsrinne beim Inkubieren geschwenkt wird. Während bei leicht verfügbaren Lösungen wie unspezifischen Waschpuffern, beispielsweise PBS, oder Lösungen zum Entwickeln eines Signals ein Überschuss eingesetzt werden kann, beschränkt sich der Anwender bei anderen Lösungen wie schwierig zu gewinnenden, nur in geringen Volumina verfügbaren Reagenzien, beispielsweise Antikörpern, insbesondere primären Antikörpern, auf das absolut notwendige Mindestvolumen.

Optional weist die Inkubationsrinne einen Einlasskanal auf. Dabei handelt es sich um ein abgeschlossenes Mittel zum Zufluss von Flüssigkeit, das nicht druckabschließend ausgeführt sein muss. Der Zufluss kann direkt in die Inkubationsrinne erfolgen oder über eine Einlasskompartimentöffnung in ein Einlasskompartiment, bevorzugt entlang der Längsachse am Ende der Inkubationsrinne, bevorzugt am anderen Ende als das Auslasskompartiment. Der Boden des Einlasskompartimentes kann wenigstens teilweise unterhalb der Ebene des Bodens der Vertiefung liegen, um den durch auftreffende Flüssigkeitstropfen erzeugten lokalen Druck abzumildern.

Die Inkubationsrinne kann bevorzugt derart bewegt werden, dass die Flüssigkeit durchmischt und ihre Exposition gegenüber dem Träger gefördert wird, beispielsweise durch Schwenken, Vibrieren, Schütteln oder dergleichen. In einer bevorzugten Ausführungsform ist die Inkubationsrinne über ihre Querachse schwenkbar, so dass sich die Flüssigkeit in Richtung des tiefer liegenden Längsendes der Inkubationsrinne verschiebt. Im geschwenkten Zustand, besonders wenn die Auslassöffnung sich am Längsende befindet und die Auslasskanalöffnung sich an deren Boden befindet, ist das Entnehmen der Flüssigkeit besonders einfach und effizient. Beim Schwenken bildet die Inkubationsrinne mit der Grundfläche einen Winkel von 1 bis 45°, bevorzugter 2,5 bis 30°, noch bevorzugter 7,5 bis 25° aus

Im Folgenden wird die Erfindung unter Bezugnahme auf die Figuren anhand von Ausführungsbeispielen erläutert. Die beschriebenen Ausführungsformen sind in jeder Hinsicht lediglich beispielhaft und nicht als einschränkend zu verstehen, und verschiedene Kombinationen der angeführten Merkmale sind vom Umfang der Erfindung umfasst.

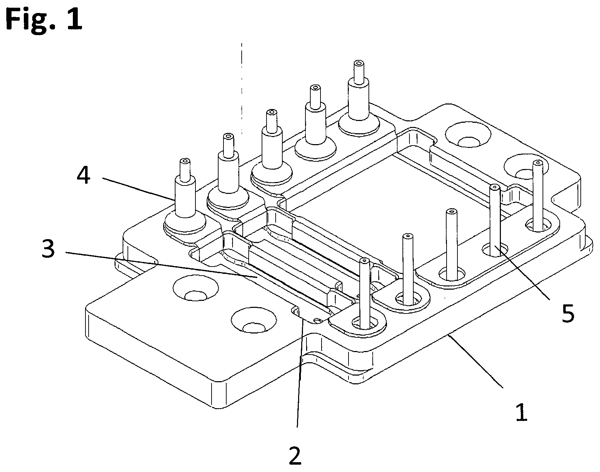

**Fig. 1** zeigt eine erfindungsgemäße Vorrichtung umfassend ein Unterteil (1) mit einer darin befindlichen Inkubationsrinne (2) mit einer Vertiefung (3), einer Absaughaube (4) auf dem Auslasskompartiment und einem Einlasskanal (5), der ins Einlasskompartiment führt.

**Fig. 2A** zeigt eine erfindungsgemäße Vorrichtung umfassend ein Unterteil (1) sowie eine Inkubationsrinne (2) mit Vertiefung (3) von oben. Der schwarze Balken markiert die Stelle, an der der in **Fig. 2B** dargestellte Querschnitt der Vorrichtung liegt.

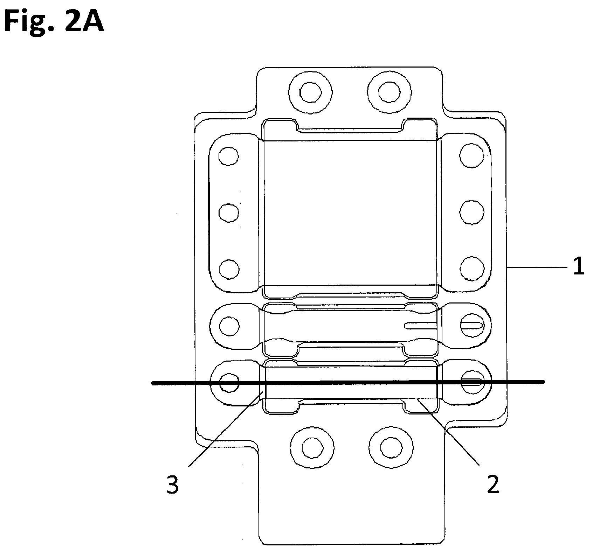

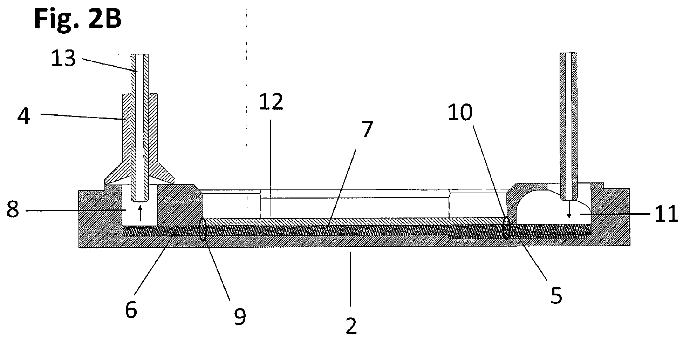

**Fig. 2B** zeigt eine erfindungsgemäße Vorrichtung im Querschnitt an der in **Fig. 2A** mit dem schwarzen Balken markierten Stelle durch eine Inkubationsrinne (2). An einem Ende entlang der Längsachse der Inkubationsrinne befindet sich ein Auslasskompartiment (8), das mit der mit einer Flüssigkeit (7) gefüllten Vertiefung über einen Auslasskanal (6) verbunden ist. Durch Anlegen von Unterdruck kann über eine in der Absaughaube (4) befindliche Ableitung (13) Flüssigkeit aus dem Auslasskompartiment abgesaugt werden. Über einen Einlasskanal (5) kann Flüssigkeit in das Einlasskompartiment (11) eingeleitet werden. Einlasskanal (5) und Auslasskanal (6) münden in der Vertiefung in Gestalt einer Einlasskompartimentöffnung (10) bzw. Auslasskompartimentöffnung (9). Ein Träger mit einer biologischen Probe (12) ist in die Flüssigkeit eingetaucht. Der Boden des Einlasskompartiments (11) liegt in **Fig. 2B** unterhalb der Ebene des Bodens der Vertiefung.

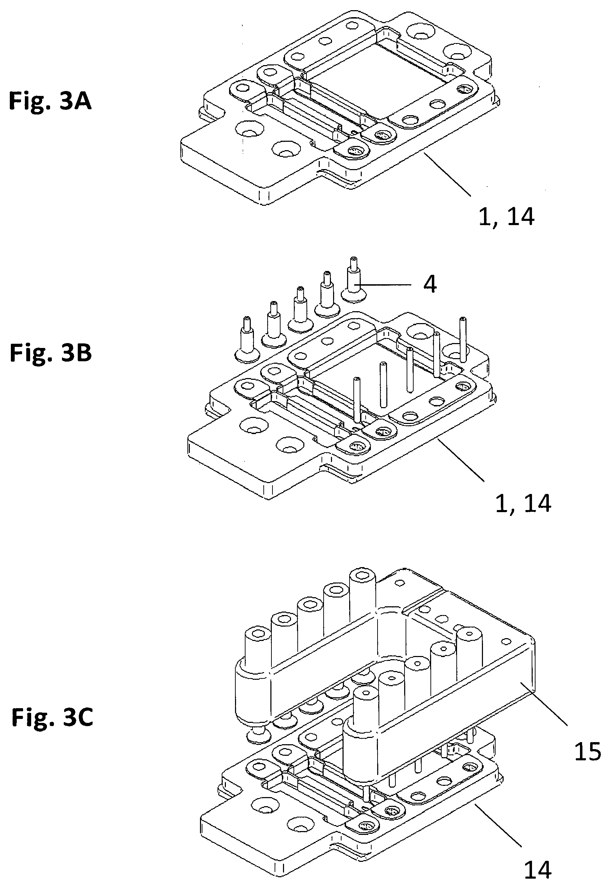

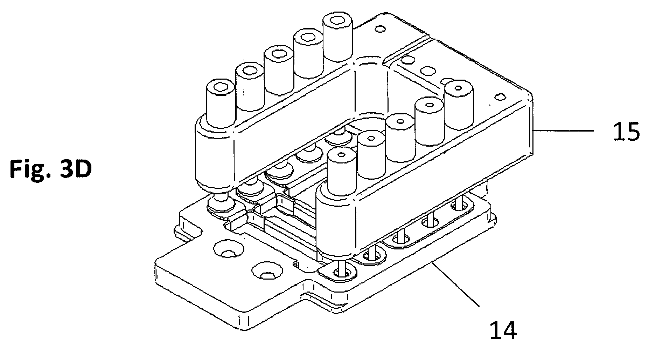

Die verschiedenen Teilfiguren von **Fig. 3** zeigen die Interaktion einer erfindungsgemäßen Vorrichtung umfassend ein Unterteil (1, 14) mit einem daran angepassten Oberteil (15). In **Fig. 3A** ist nur das Unterteil gezeigt.

In **Fig. 3B** ist das Unterteil zusammen mit jeweils einem Set Absaughauben (4) und Einlasskanälen (5) gezeigt.

**Fig. 3C** zeigt Oberteil (15) und Unterteil (14), wobei das Oberteil mit Absaughauben und Einlasskanälen ausgestattet ist, die derart angeordnet sind, dass sie auf die Auslasskompartiment- bzw. Einlasskompartimentöffnungen aufsetzen können.

**Fig. 3D** zeigt die gleiche erfindungsgemäße Vorrichtung wie **Fig. 3C****,** abgesehen davon, dass das Oberteil (15) auf dem Unterteil (14) aufsitzt.

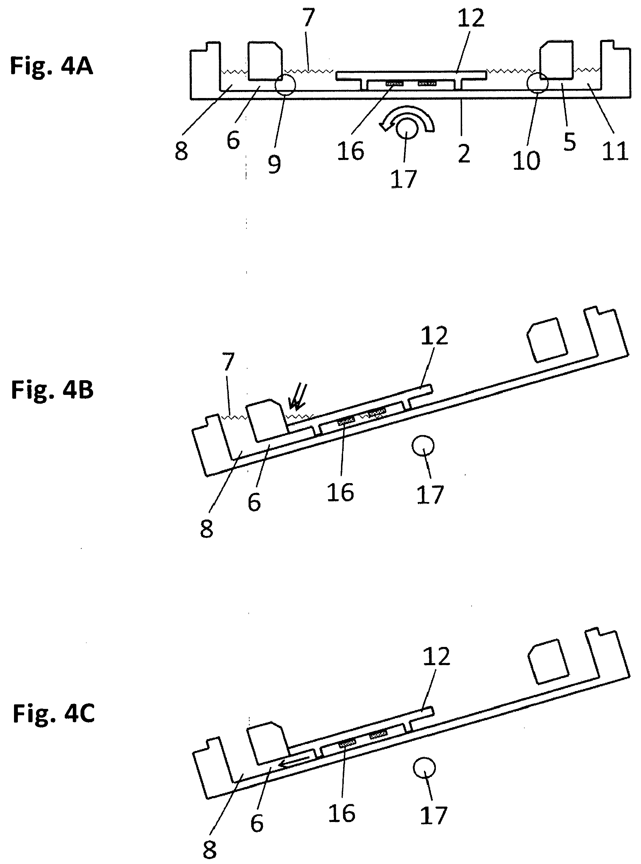

**Fig. 4A** zeigt eine erfindungsgemäße, mit einer Flüssigkeit (7) gefüllte Inkubationswanne (2) mit einer Vertiefung (3), die mit einem Träger mit einer biologischen Probe (12) bestückt ist. Die Probe (16) befindet sich auf dem Träger auf der dem Boden der Inkubationsrinne zugewandten Seite. Der Träger kann entlang der Längsachse in der Inkubationsrinne hin- und her bewegt werden, insbesondere dadurch, dass die Inkubationswanne mit einer Drehachse (17) über die Querachse (nicht eingezeichnet, parallel zur Drehachse) geschwenkt wird. Der Träger steht mit zwei Füßen auf dem Boden, die so ausgeführt sind, dass Flüssigkeit entlang der Längsachse an ihnen vorbeiströmen kann.

**Fig. 4B** zeigt die gleiche Vorrichtung nach dem Schwenken über die Querachse. Der Träger (12) mit der biologischen Probe (16) bewegt sich, mit der Flüssigkeit zusammen der Schwerkraft folgend, bis zum Längsende der Vertiefung der Inkubationsrinne, wobei der Träger lückenlos an das Längsende der Vertiefung anschließt (mit einem Doppelpfeil markiert). Die Flüssigkeit sammelt sich am nach unten geschwenkten Längsende der Vertiefung bzw. der Inkubationsrinne an.

**Fig. 4C** zeigt, dass Träger, Boden und Wände der Inkubationsrinne in dieser Situation einen Kanal bilden, durch den die Flüssigkeit durch den Auslasskanal (6) besonders effizient abgesaugt werden kann, wenn im Auslasskompartiment Unterdruck angelegt wird. Der Strom der Flüssigkeit durch den Kanal ist mit einem einfachen Pfeil markiert. Es verbleiben am Längsende keine Flüssigkeitsreste.

### Bezugszeichenliste:

- 1: Vorrichtung auffassend ein Unterteil
- 2: Inkubationsrinne
- 3: Vertiefung
- 4: Absaughaube
- 5: Einlasskanal
- 6: Auslasskanal
- 7: Flüssigkeit
- 8: Auslasskompartiment
- 9: Auslasskompartimentöffnung
- 10: Einlasskompartimentöffnung
- 11: Einlasskompartiment
- 12: Träger mit biologischer Probe
- 13: Ableitung
- 14: Unterteil
- 15: Oberteil
- 16: Probe
- 17: Drehachse

## Patentansprüche

1. Inkubationsrinne mit einer von den Wänden der Inkubationsrinne gebildeten Vertiefung und einem Boden,
wobei die Inkubationsrinne ein Mittel zum Absaugen von Flüssigkeit an wenigstens einem Längsende der Vertiefung aufweist,
bevorzugt eine in einen Auslasskanal mündende Öffnung an dem Längsende der Vertiefung, besonders bevorzugt in einer Wand der Inkubationsrinne, wobei Öffnung und Auslasskanal so ausgeführt sind, dass Unterdruck angelegt werden kann,
wobei die Inkubationsrinne über ihre Querachse schwenkbar ist und wobei die Inkubationsrinne mit einem Träger bestückt werden kann.

2. Inkubationsrinne gemäß Anspruch 1,
wobei über den Auslasskanal Unterdruck angelegt ist.

3. Inkubationsrinne nach einem der Ansprüche 1 bis 2,
wobei das Mittel zum Absaugen das Absaugen der Flüssigkeit *am Boden* gestattet und bevorzugt eine in einen Auslasskanal mündende Öffnung ist, die sich am Boden der Inkubationsrinne befindet.

4. Inkubationsrinne nach einem der Ansprüche 1 bis 3,
wobei die Inkubationswanne eine in einen Auslasskanal mündende Öffnung aufweist, die in einen auf der Ebene des Bodens oder darunter verlaufenden Auslasskanal mündet, der an ein von der Vertiefung getrenntes Auslasskompartiment anschließt, welches eine Auslasskompartimentöffnung aufweist.

5. Inkubationsrinne nach einem der Ansprüche 1 bis 4,
enthaltend einen Träger mit einer biologischen Probe, die auf dem Träger bevorzugt auf der Seite des Trägers angeordnet ist, die dem Boden der Inkubationsrinne zugewandt ist, bevorzugt auf dem Boden aufliegend.

6. Inkubationsrinne nach einem der Ansprüche 1 bis 5,
enthaltend eine Flüssigkeit, wobei die Inkubationswanne bevorzugt eine in einen Auslasskanal mündende Öffnung aufweist und die Oberfläche der Flüssigkeit bevorzugt über der Öffnung liegt.

7. Inkubationsrinne nach einem der Ansprüche 1 bis 6,
wobei der Träger und die Inkubationsrinne derart aneinander angepasst sind, dass der Träger in der Vertiefung entlang der Längsachse der Inkubationswanne hin- und her bewegt werden kann, wenn die Inkubationsrinne mit dem Träger bestückt ist.

8. Inkubationsrinne nach einem der Ansprüche 1 bis 7,
weiter umfassend eine in einen Einlasskanal mündende Öffnung, bevorzugt in einer Wand der Inkubationsrinne, die an ein von der Vertiefung getrenntes Einlasskompartiment anschließt, das eine Einlasskompartimentöffnung aufweist,
wobei der Einlasskanal bevorzugt auf der Ebene des Bodens oder darunter entlang der Längsachse der Inkubationsrinne verläuft.

9. Inkubationsrinne nach Anspruch 8,
aufweisend eine in einen Auslasskanal mündende Öffnung entlang der Längsachse der Inkubationsrinne am einen Längsende und eine in einen Einlasskanal mündende Öffnung am anderen Längsende der Vertiefung.

10. Inkubationsrinne nach einem der Ansprüche 4 bis 9,
weiter umfassend eine auf der Auslasskompartimentöffnung lösbar aufsitzende Absaughaube mit einer Ableitung, über die Unterdruck angelegt werden kann.

11. Inkubationsrinne nach einem der Ansprüche 7 bis 10,
wobei der Träger beim Bewegen bis an ein Längsende der Vertiefung bewegt werden kann und dabei lückenlos an das Längsende der Vertiefung anschließt.

12. Vorrichtung umfassend ein Unterteil aufweisend Inkubationsrinnen mit jeweils wenigstens einer Auslasskompartimentöffnung nach einem der Ansprüche 10 bis 11 sowie ein rahmenförmiges Oberteil umfassend Absaughauben,
wobei Unterteil und Oberteil derart aneinander angepasst sind, dass das Oberteil derart auf das Unterteil aufgesetzt werden kann, dass auf jeder Auslasskompartimentöffnung eine Absaughaube aufsitzt.

13. Verfahren zum Inkubieren eines Trägers, umfassend die Schritte:
a) Inkubation eines Trägers in der Vertiefung einer Inkubationsrinne mit einer von den Wänden der Inkubationsrinne gebildeten Vertiefung und einem Boden in Gegenwart einer Flüssigkeit, und
b) Absaugen der Flüssigkeit an einem Längsende der Vertiefung, bevorzugt über eine Öffnung, die in einen unter Unterdruck stehenden Auslasskanal mündet,
wobei sich die Öffnung am Längsende der Vertiefung befindet, bevorzugt am Boden der Inkubatiönsrinne,
und wobei es sich bei der Inkubationsrinne um eine Inkubationsrinne gemäß einem der Ansprüche 1 bis 11 oder eine Inkubationsrinne in der Vorrichtung gemäß Anspruch 12 handelt.

14. Verfahren nach Anspruch 13,
wobei die Inkubationsrinne über ihre Querachse schwenkbar ist und wenigstens einer der Schritte a) und b), bevorzugt Schritt b) unter Schwenken durchgeführt wird.

15. Verfahren nach Anspruch 14,
wobei Schritt b) in dem Moment ausgeführt wird, in dem eine Inkubationsrinne derart geschwenkt ist, dass eine darin befindliche Flüssigkeit sich an dem Längsende der Inkubationsrinne ansammelt, bevorzugt im größtmöglichen Maß, an dem die Flüssigkeit abgesaugt wird,
und in dem bevorzugt der Träger sich bis an dieses Längsende der Vertiefung bewegt hat und besonders bevorzugt dabei lückenlos an das Längsende der Vertiefung anschließt.
